# EUROPEAN PATENT APPLICATION

(11) **EP 4 411 960 A1**
(43) Date of publication of application: **07.08.2024**
(21) Application number: 23858420.5
(22) Date of filing: 21.07.2023
(51) Int. Cl.: H01M 50/383, H01M 50/143, H01M 10/658, H01M 50/204, H01M 50/249

(54) **BATTERY MODULE, AND BATTERY PACK AND VEHICLE COMPRISING SAME**

(30) Priority: 23.12.2022 KR 20220183382; 31.03.2023 KR 20230043171
(71) Applicant: LG ENERGY SOLUTION, LTD., Seoul 07335 (KR)
(72) Inventor: PARK, Jeong-Hoon, Yuseong-gu, Daejeon 34122 (KR); KIM, Soo-Youl, Yuseong-gu, Daejeon 34122 (KR); JUNG, Hye-Mi, Yuseong-gu, Daejeon 34122 (KR)
(74) Representative: Plasseraud IP
(86) International application number: PCT/KR2023/010606
(87) International publication number: WO 2024/135973

(57) **Abstract**

A battery module according to an embodiment of the present disclosure includes a cell assembly including a plurality of battery cells stacked, a module case accommodating the cell assembly, and a busbar assembly coupled to the module case and electrically connected to the plurality of battery cells, wherein the cell assembly includes an interrupt member configured to cover a portion of the plurality of battery cells to prevent thermal propagation to adjacent battery cells in a stack direction of the plurality of battery cells upon an occurrence of a thermal event in at least one battery cell.

## Description

### TECHNICAL FIELD

The present disclosure relates to a battery module, and a battery pack and a vehicle comprising the same, and more particularly, to a battery module with improved safety and a battery pack and a vehicle comprising the same.

The present application claims priority to Korean Patent Application No. 10-2022-0183382 filed on December 23, 2022 and Korean Patent Application No. 10-2023-0043171 filed on March 31, 2023 in the Republic of Korea, the disclosures of which are incorporated herein by reference.

### BACKGROUND ART

Due to being easily applicable to various products and having electrical properties such as high energy density, secondary batteries are commonly applied to not only portable devices but also electric vehicles (EVs) or hybrid electric vehicles (HEVs) that are driven by an electrical driving source. Secondary batteries remarkably reduce the use of fossil fuels, and in addition to the primary advantage, they do not generate by-products from the use of energy. From this perspective, secondary batteries are seen as a new source of energy with eco-friendliness and energy efficiency.

The types of secondary batteries widely used at present include lithium ion batteries, lithium polymer batteries, nickel cadmium batteries, nickel hydrogen batteries, nickel zinc batteries or the like. A unit secondary battery cell or a unit battery cell has an operating voltage of about 2.5V to 4.5V. Accordingly, when higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then make a battery pack or a battery rack using at least one battery module with an addition of any other component.

However, the plurality of secondary batteries (battery cells) or the plurality of battery modules densely arranged in a narrow space may be vulnerable to thermal events. In particular, when an event such as thermal runaway occurs in any one battery cell, high temperature gases, flames or heat may be produced. When gases, flames or heat are transferred to other battery cells included in the same battery module, explosive chain reaction such as thermal propagation may occur. Additionally, the chain reaction may cause an accident such as fire or explosion in not only the corresponding battery module but also other battery module.

Moreover, medium and large-scale battery packs for electric vehicles include a large number of battery cells and a large number of battery modules to increase the output and/or capacity, and have a higher risk of thermal chain reaction. Besides, the battery packs for electric vehicles may be mounted near users such as drivers. When it fails to adequately control a thermal event in a specific battery module, causing chain reaction, not only economic loss but also human loss may occur.

Accordingly, there is a need for an approach to improve safety against thermal events.

### SUMMARY

### Technical Problem

Accordingly, the present disclosure is directed to providing a battery module with improved safety against thermal events and a battery pack and a vehicle comprising the same.

However, the technical problem to be solved by the present disclosure is not limited to the above-described problems, and these and other problems will be clearly understood by those skilled in the art from the following description.

### Technical Solution

To solve the above-described problem, the present disclosure provides a battery module including a cell assembly including a plurality of battery cells stacked; a module case accommodating the cell assembly; and a busbar assembly coupled to the module case and electrically connected to the plurality of battery cells, wherein the cell assembly includes an interrupt member configured to cover a portion of the plurality of battery cells to prevent thermal propagation to adjacent battery cells in a stack direction of the plurality of battery cells upon an occurrence of a thermal event in at least one battery cell.

Additionally, preferably, the interrupt member may guide venting of vent materials emitted from the at least one battery cell in a specific direction upon the occurrence of the thermal event in the at least one battery cell.

Additionally, preferably, the module case may have at least one vent on bottom to vent the vent materials, and the interrupt member may have an open bottom to guide the venting of the vent materials toward the vent of the module case.

Additionally, preferably, the cell assembly may include a thermal barrier member disposed between the plurality of battery cells in the stack direction of the plurality of battery cells.

Additionally, preferably, the thermal barrier member may contact the interrupt member in the stack direction of the plurality of battery cells.

Additionally, preferably, two end portions of the interrupt member may be disposed close to the busbar assembly.

Additionally, preferably, the busbar assembly may cover two sides of the plurality of battery cells, and the two end portions of the interrupt member may be disposed close to the busbar assembly.

Additionally, preferably, the interrupt member may be made of a flexible material.

Additionally, preferably, the interrupt member may cover a top portion and two edge portions of the plurality of battery cells.

Additionally, preferably, the interrupt member may cover a front side portion and a rear side portion of the two edge portions of the plurality of battery cells in the stack direction of the plurality of battery cells.

Additionally, preferably, each of the plurality of battery cells may include an electrode assembly; a battery case including a case body accommodating the electrode assembly and a case terrace extending in a stepped manner from two sides of the case body; and a pair of electrode leads connected to the electrode assembly, protruding from the case terrace of the battery case and connected to the busbar assembly, and the interrupt member may cover a top portion of the case body, and a front side portion and a rear side portion of the case terrace.

Additionally, preferably, the top portion of the case body may have a sealing portion connected to the case terrace and configured to seal the case body, and the interrupt member may cover the sealing portion.

Additionally, preferably, the interrupt member may have a guide slit to allow the pair of electrode leads to pass through to prevent interference with the pair of electrode leads.

In addition, the present disclosure provides a battery pack including at least one battery module according to the above-described embodiments; and a pack case accommodating the at least one battery module.

Furthermore, the present disclosure provides a vehicle including at least one battery pack according to the above-described embodiment.

### Advantageous Effects

According to the above-described embodiments, it may be possible to provide battery modules with improved safety against thermal events and battery packs and vehicles comprising the same.

The present disclosure may have many other effects, and they will be described in each embodiment, and regarding the effect that may be easily anticipated by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram illustrating a battery module according to an embodiment of the present disclosure.
FIG. 2 is an exploded perspective view of the battery module of FIG. 1.
FIG. 3 is a partial cross-sectional view illustrating a connected part of a cell assembly and a busbar assembly of the battery module of FIG. 2.
FIG. 4 is a diagram illustrating a cell assembly of the battery module of FIG. 1.
FIG. 5 is a diagram illustrating an interrupt member mounted in a battery cell of the cell assembly of FIG. 4.
FIG. 6 is a diagram illustrating the mounting of the interrupt member onto the battery cell of FIG. 5.
FIG. 7 is a diagram illustrating the interrupt member of FIG. 6.
FIG. 8 is a side view of the interrupt member of FIG. 7.
FIG. 9 is a diagram illustrating an interrupt member according to another embodiment of the present disclosure.
FIG. 10 is a side view of the interrupt member of FIG. 9.
FIG. 11 is a diagram illustrating an interrupt member according to still another embodiment of the present disclosure.
FIG. 12 is a side view of the interrupt member of FIG. 11.
FIG. 13 is a diagram illustrating a directional venting path of vent materials such as flames or gases when a thermal event occurs due to an abnormal situation in at least one battery cell of the battery module of FIG. 1.
FIG. 14 is a diagram illustrating a directional venting path of vent materials such as flames or gases emitted from the battery cell when the thermal event occurs as shown in FIG. 12.
FIG. 15 is a diagram illustrating thermal propagation prevention and directional venting guide through an interrupt member when the thermal event occurs in the battery cell in which the abnormal situation occurred as shown in FIG. 13.
FIG. 16 is a diagram illustrating a battery pack according to an embodiment of the present disclosure.
FIG. 17 is a diagram illustrating a vehicle according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time that the application was filed.

The terms indicating directions such as upper, lower, left, right, front and rear are used for convenience of description, but it is obvious to those skilled in the art that the terms may change depending on the position of the stated element or an observer.

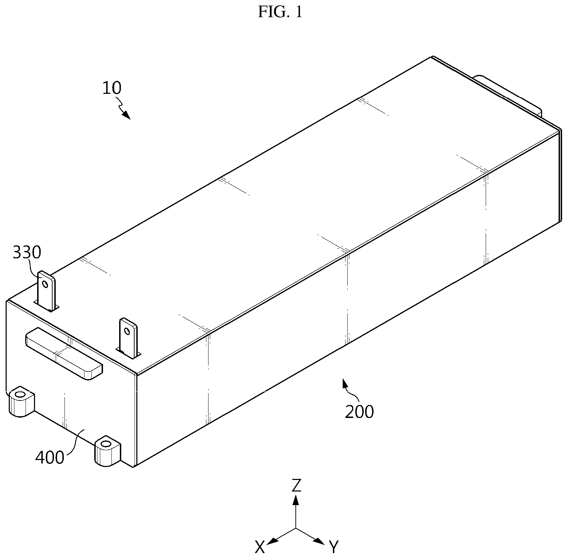

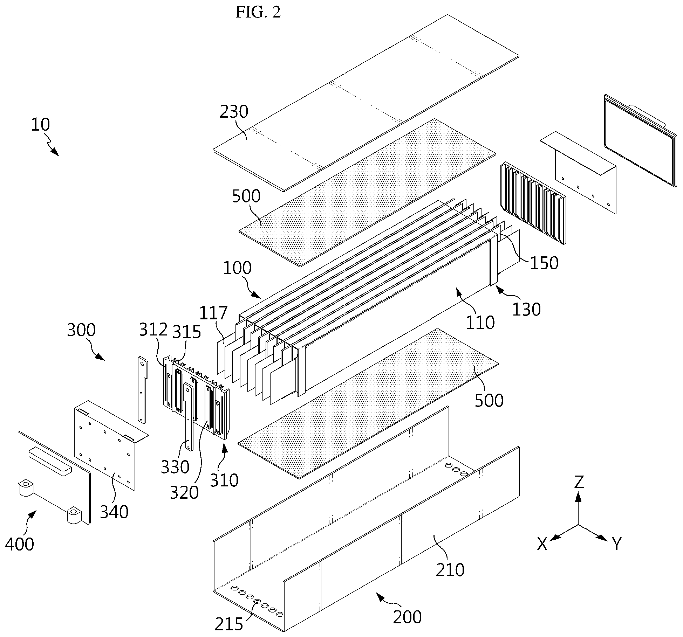

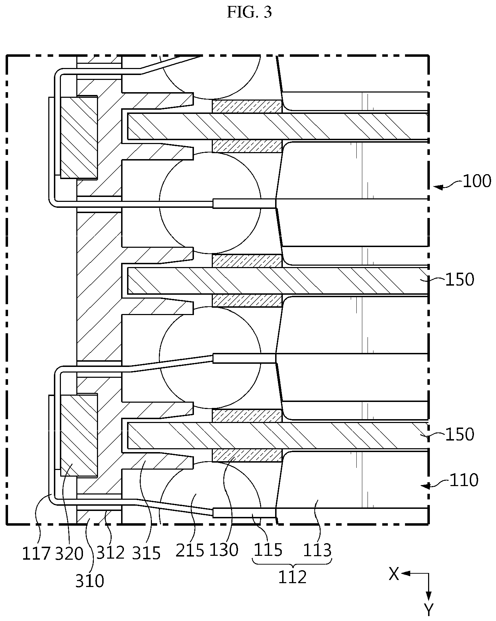

FIG. 1 is a diagram illustrating a battery module 10 according to an embodiment of the present disclosure, FIG. 2 is an exploded perspective view of the battery module 10 of FIG. 1, and FIG. 3 is a partial cross-sectional view illustrating a connected part of a cell assembly 100 and a busbar assembly 300 of the battery module 10 of FIG. 2.

Referring to FIGS. 1 to 3, the battery module 10 may include a cell assembly 100, a module case 200 and a busbar assembly 300.

The cell assembly 100 may include a plurality of battery cells 110 stacked. The plurality of battery cells 110 may be electrically connected to each other and connected to the busbar assembly 300 as described below. The plurality of battery cells 110 may be secondary batteries, for example, pouch type secondary batteries.

The module case 200 may form the appearance of the battery module 10 and accommodate the cell assembly 100. To this end, the module case 200 may have an accommodation space for accommodating the cell assembly 100.

The busbar assembly 300 may be coupled to the module case 200 to form the appearance of the battery module 10 together with the module case 200. The busbar assembly 300 may be electrically connected to the plurality of battery cells 110 of the cell assembly 100 to sense the voltage of the plurality of battery cells 110.

The cell assembly 100 may include an interrupt member 130.

The interrupt member 130 may be configured to cover a portion of the plurality of battery cells 110 to prevent thermal propagation to the adjacent battery cells 110 in the stack direction (Y axis direction) of the plurality of battery cells 110 when a thermal event occurs due to an abnormal situation such as overheating in at least one of the battery cells 110.

When the thermal event occurs, the battery cell 110 in which the abnormal situation occurred may have high temperature due to overheating and produce vent materials such as flames or gases. When the vent materials such as heat, flames or gases from the specific battery cell 110 spread to the adjacent battery cell 110, thermal runaway occurs in the adjacent battery cell 110, posing a bigger risk such as fire spread or explosion in the battery cells 110.

The battery module 10 according to an embodiment of the present disclosure may effectively prevent the spread of the vent materials such as heat, flames or gases produced from the battery cell 110 in which the abnormal situation occurred to the adjacent battery cell 110 through the interrupt member 130 covering the portion of the plurality of battery cells 110 when the thermal event occurred.

Accordingly, the battery module 10 according to an embodiment of the present disclosure may minimize secondary damage risks such as fire spread or explosion that may occur when the thermal event occurs through the interrupt member 130.

The interrupt member 130 may guide the venting of the vent materials emitted from the at least one battery cell 110 in a specific direction when the thermal event occurs in the at least one battery cell 110. When the thermal event occurs, the vent materials such as flames or gases may be produced in the battery cell 110 or the module case 200 in which the abnormal situation occurred. The vent materials may increase the pressure in the module case 200 of the battery module 10 or explode the adjacent components. Accordingly, it is necessary to vent the vent materials out of the module case 200 quickly when the thermal event occurs. Additionally, in addition to fast venting of the vent materials out of the module case 200, it is important to control the venting direction of the vent materials in order to minimize damage to the components inside the module case 200.

In an embodiment of the present disclosure, the interrupt member 130 may prevent thermal propagation of the adjacent battery cell 110 and guide the venting direction of the vent materials, i.e., guide the venting of the vent materials in a specific direction. That is, the interrupt member 130 may control the venting path of the vent materials such as gases or flames by guiding the directional venting in the specific direction to force the vent materials out of the module case 200 more quickly.

Hereinafter, the directional venting guide through the interrupt member 130 will be described in more detail.

The module case 200 may have at least one vent 215 on bottom (-Z axis direction) to force the vent materials out. Specifically, a plurality of vents 215 may be provided, and disposed at two sides on the bottom of the module case 200. The vent 215 may force the vent materials such as flames or gases in the module case 200 out of the module case 200 when the thermal event occurs. The vent 215 may be a vent hole having a predetermined opening or a venting unit that may be mounted in the module case 200. Meanwhile, the vent 215 may be structured to melt or break open at or above a predetermined temperature or a predetermined pressure to bring the inside and outside of the module case 200 into communication with each other when the thermal event occurs.

The interrupt member 130 may have the open bottom to guide the venting of the vent materials toward the vent 215 of the module case 200. When the thermal event occurs, the vent materials may be guided toward the vent 215 on the bottom of the module case 200 through the open bottom of the interrupt member 130 and exit the vent 215 quickly.

As described above, the interrupt member 130 according to this embodiment may guide the vent materials such as gases or flames produced when the thermal event occurs in the specific direction, specifically, a downward direction (-Z axis direction) of the battery module 10 and force them out the battery module 10.

Hereinafter, the cell assembly 100 including the interrupt member 130 will be described in more detail.

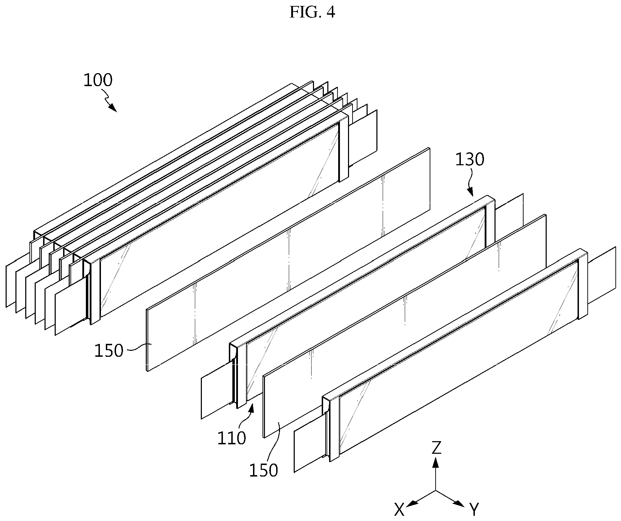

FIG. 4 is a diagram illustrating the cell assembly 100 of the battery module 10 of FIG. 1.

Referring to FIG. 4, the cell assembly 100 may include a thermal barrier member 150.

The thermal barrier member 150 may be disposed between the plurality of battery cells 110 in the stack direction (Y axis direction) of the plurality of battery cells 110. The thermal barrier member 150 may prevent the transfer of heat, gases or flames from the battery cell 110 in which the abnormal situation occurred when the thermal event occurred to the adjacent battery cell 110 together with the interrupt member 130.

A plurality of thermal barrier members 150 may be provided, and may have a sufficient size to cover the battery cells 110 in the stack direction (Y axis direction) of the battery cells 110.

The thermal barrier member 150 may be contacted to the interrupt member 130 in the stack direction (Y axis direction) of the plurality of battery cells 110. Accordingly, the plurality of battery cells 110 may be surrounded by the interrupt member 130 and the thermal barrier member 150 excluding the open bottom of the interrupt member 130 and a guide slit 135 area as described below.

Accordingly, the battery module 10 according to an embodiment of the present disclosure may prevent thermal propagation to the battery cell 110 adjacent to the battery cell 110 in which the abnormal situation occurred when the thermal event occurs more effectively through the interrupt member 130 and the thermal barrier member 150.

Referring back to FIGS. 1 to 4, a portion of the interrupt member 130 may be disposed close to the busbar assembly 300. Specifically, two end portions of the interrupt member 130 may be disposed close to the busbar assembly 300. More specifically, the busbar assembly 300 may cover two sides (X axis direction) of the plurality of battery cells 110. The two end portions of the interrupt member 130 may be disposed adjacent to the busbar assembly 300.

In the case of the area of the cell assembly 100 near the busbar assembly 300, in case where heat is transferred to the adjacent battery cells 110 when the thermal event occurs due to the electrical connection of the busbar assembly 300 and the plurality of battery cells 110, there are higher risks of fire spread or explosion. In an embodiment of the present disclosure, since the two end portions of the interrupt member 130 are disposed close to the busbar assembly 300, it may be possible to prevent thermal propagation to the adjacent battery cells 110 that may occur near the busbar assembly 300 more effectively when the thermal event occurs.

The interrupt member 130 may be made of a flexible material. Accordingly, the interrupt member 130 may increase the mounting convenience with the battery cells 110 and absorb or cancel off an assembly tolerance with the adjacent components when mounting. Additionally, the interrupt member 130 may have a predetermined level of elasticity to buffer external impacts that may be applied to the battery cells 110.

The interrupt member 130 may include a fire resistant material. For example, the interrupt member 130 may include glass fiber, rubber or silicone. This is provided by way of illustration, and the interrupt member 130 may include any other material having flexibility and fire resistance.

The interrupt member 130 may include an insulation material. Accordingly, the interrupt member 130 may effectively prevent electricity conduction from the battery cell 110 in which the abnormal situation occurred to the adjacent battery cell 110. Additionally, the interrupt member 130 may include a flame retardant material. As described above, the interrupt member 130 may include fire resistant, insulation and flame retardant materials to increase the thermal propagation prevention or delay effect when the thermal event occurs.

A plurality of interrupt members 130 corresponding to the number of battery cells 110 may be provided. Each of the plurality of interrupt members 130 may cover each of the portion of the plurality of battery cells 110. Accordingly, in an embodiment of the present disclosure, since the plurality of the interrupt member 130 corresponding to the number of battery cells 110 is provided, thermal propagation prevention or delay and downward directional venting guide for each battery cell 110 may be uniformly achieved in any of the battery cells 110.

Hereinafter, the interrupt member 130 according to an embodiment of the present disclosure will be described in more detail.

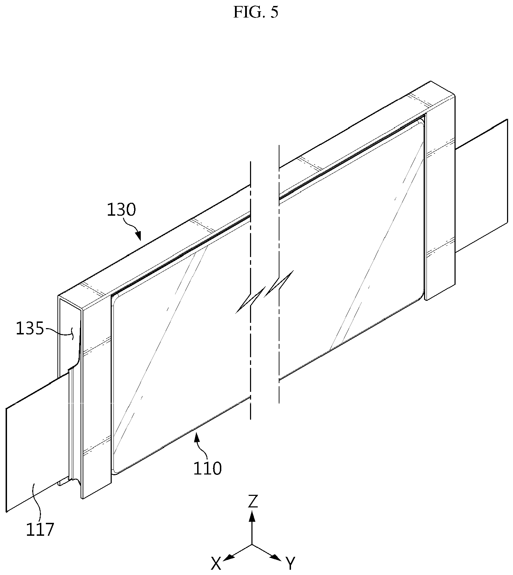

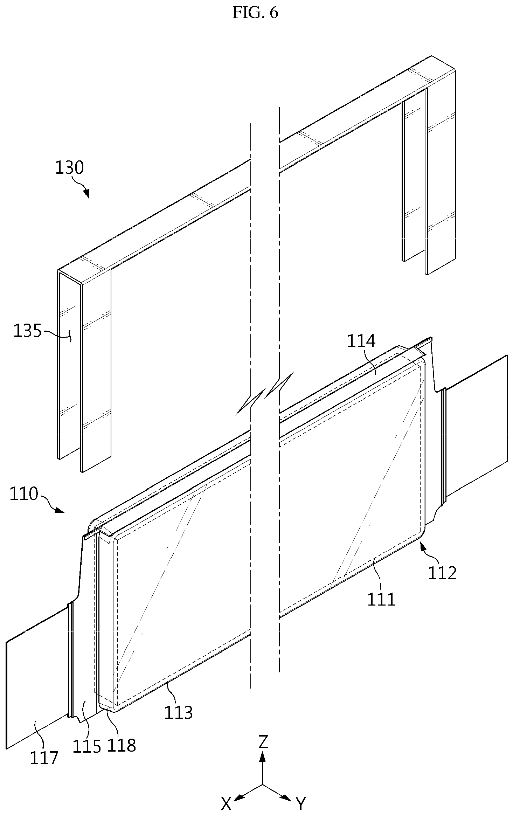

FIG. 5 is a diagram illustrating the interrupt member 130 mounted in the battery cell 110 of the cell assembly 100 of FIG. 4, and FIG. 6 is a diagram illustrating the mounting of the interrupt member 130 onto the battery cell 110 of FIG. 5.

Referring to FIGS. 5 and 6 and FIGS. 1 to 4, the interrupt member 130 may cover the top portion and two edge portions of the plurality of battery cells 110. Accordingly, the interrupt member 130 may effectively prevent thermal propagation to the adjacent battery cell 110 that may occur at the top and two edge portions of the plurality of battery cells 110 when the thermal event occurs. Additionally, the interrupt member 130 may guide the movement of the vent materials such as flames or gases produced when the thermal event occurs in the downward direction (-Z axis direction) of the battery cells 110 through the above-described cover structure.

The structure of the interrupt member 130 covering the two edge portions of the battery cells 110 will be described in detail below.

The interrupt member 130 may cover the front side portion (+Y axis direction) and the rear side portion (-Y axis direction) of the two edge portions of the plurality of battery cells 110 in the stack direction (Y axis direction) of the plurality of battery cells 110.

The two edge portions of the plurality of battery cells 110 has a predetermined step space in one direction (+Y axis direction or -Y axis direction) of the front-rear direction (Y axis direction) and the front-rear direction (Y axis direction) according to the characterizing shape of the pouch type secondary battery. The vent materials produced when the thermal event occurs may enter and stay in the step space due to the convection. In case where the vent materials such as flames or gases may stay or build in the step space, there is a high risk that the vent materials spread to the adjacent battery cells 110, and a rapid rise in internal pressure of the module case 200 may increase the likelihood that secondary damage such as explosion may occur in the battery module 10.

In this embodiment, since the interrupt member 130 covers the two edge portions of the battery cells 110 in the front-rear direction (Y axis direction), it may be possible to significantly reduce the total size of the step space in the stack direction (Y axis direction) of the battery cells 110. Accordingly, in an embodiment of the present disclosure, it may be possible to reduce the volume of the step space through the interrupt member 130, thereby reducing or preventing the vent materials such as flames or gases from entering the step space, and significantly reducing the likelihood that the vent materials such as flames or gases stay in the step space.

Additionally, the vent 215 of the module case 200 may be disposed close to the step space on the bottom of the module case 200. This is to force the vent materials such as flames or gases in the step space out of the module case 200 more quickly.

Hereinafter, the plurality of battery cells 110, for example, the pouch type secondary batteries will be described in more detail.

Each of the plurality of battery cells 110 may include an electrode assembly 111, a battery case 112 and a pair of electrode leads 117.

The electrode assembly 111 may include a positive electrode plate, a negative electrode plate and a separator. The electrode assembly 111 is well known, and hereinafter, its detailed description is omitted.

The battery case 112 may accommodate the electrode assembly 111. To this end, the battery case 112 may have an accommodation space for accommodating the electrode assembly 111.

The battery case 112 may include a case body 113 and a case terrace 115.

The case body 113 may accommodate the electrode assembly 111 and a portion of the pair of electrode leads 117 as described below. To this end, the case body 117 may have an accommodation space for accommodating the electrode assembly 111 and the portion of the pair of electrode leads 117.

The case terrace 115 may extend from two sides of the case body 113. The case terrace 115 may be sealed through heat welding to make the case body 113 airtight. The case terrace 115 may extend in a stepped manner from the two sides of the case body 113 due to the volume of the electrode assembly 111 in the case body 113 and the sealing, to form a predetermined step from the case body 113. In this embodiment, the predetermined step space may be formed at both the front side (+Y axis direction) and the rear side (-Y axis direction) of the case terrace 115.

The pair of electrode leads 117 may be connected to the electrode assembly 111, and may protrude from the case terrace 115 of the battery case 112 and connect to the busbar assembly 300. In this embodiment, each of the pair of electrode leads 117 may protrude from each of two sides (X axis direction) of the case terrace 115 of the battery case 112.

The interrupt member 130 may cover the top portion (+Z axis direction) of the case body 113 and the front side portion (+Y axis direction) and the rear side portion (-Y axis direction) of the case terrace 115. Accordingly, the interrupt member 130 may cover the battery cell 110 in a U shape with the open bottom.

The top portion (+Z axis direction) of the case body 113 may have a sealing portion 114 connected to the case terrace 115 and configured to seal the case body 113. The sealing portion 114 may be folded at least once for the slim design of the battery cell 110.

The interrupt member 130 may cover the sealing portion 114. When the abnormal situation occurs in the battery cell 110, the sealing portion 114 may be unintentionally opened, and in this instance, the vent materials such as flames or gases may leak out of the sealing portion 114. In this embodiment, since the interrupt member 130 covers the sealing portion 114, it may be possible to effectively prevent leakage of the vent materials such as flames or gases when the sealing portion 114 is opened.

Each of the plurality of battery cells 110 may include a cell vent 118.

The cell vent 118 may be configured to vent gases or flames when the abnormal situation occurs due to overheat in the battery cell 110, and disposed on one side of the battery case 112. Specifically, the cell vent 118 may be disposed at two sides on bottom (-Z axis direction) of the case body 113. The cell vent 118 may melt or break at or above the predetermined temperature or pressure to open the battery case 112 such that the inside of the battery case 112 is in communication with the outside.

The cell vent 118 may be integrally formed in the battery case 112, and have a smaller thickness than other areas of the battery case 112 to melt or break more quickly. This is provided by way of illustration, and the cell vent 118 may be formed in the battery case 112 as a separate member and structured to open the battery case 112 when the thermal event occurs.

The interrupt member 130 may have the guide slit 135 to allow the pair of electrode leads 117 to pass through to prevent interferences with the pair of electrode leads 117. The guide slit 135 may form a predetermined gap at the two end portions of the interrupt member 130. The guide slit 135 may guide easier electrical connection between the pair of electrode leads 117 and the busbar assembly 300.

Hereinafter, the structure of the interrupt member 130 according to an embodiment of the present disclosure will be described in more detail.

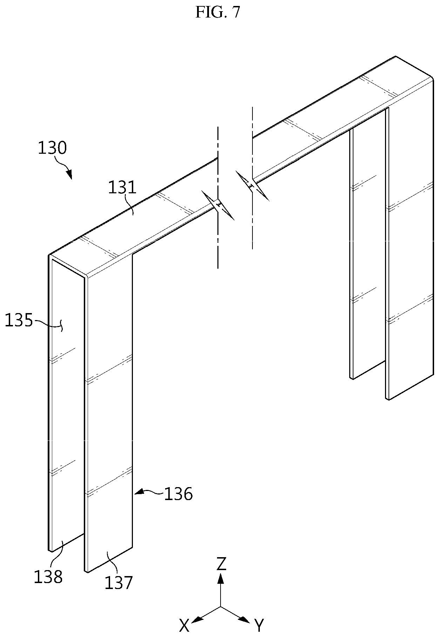

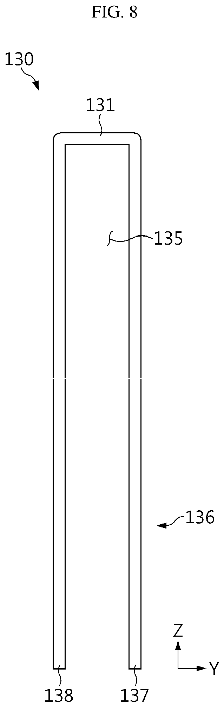

FIG. 7 is a diagram illustrating the interrupt member 130 of FIG. 6, and FIG. 8 is a side view of the interrupt member 130 of FIG. 7.

Referring to FIGS. 7 and 8, the interrupt member 130 may include an interrupt cover 131 and an interrupt leg 136.

The interrupt cover 131 may be formed with a predetermined length to cover the top portion (+Z axis direction) of the battery cell 110 (see FIG. 6). Additionally, the interrupt cover 131 may have at least the same width as the top width of the case body 113 of the battery case 112 of the battery cell 110 (see FIG. 6).

The interrupt leg 136 may bend and extend downwards (-Z axis direction) from two end portions of the interrupt cover 131. The interrupt leg 136 may be integrally formed with the interrupt cover 131, and cover the two edge portions of the battery cell 110 (see FIG. 6) in the front-rear direction (Y axis direction).

The interrupt leg 136 may include a first leg 137 and a second leg 138.

The first leg 137 may be formed with a predetermined length at two front sides (+Y axis direction) of the interrupt cover 131. The second leg 138 may be spaced a predetermined distance apart from the first leg 137 in the front-rear direction (Y axis direction), and formed with a predetermined length at two rear sides (-Y axis direction) of the interrupt cover 131. In the front-rear direction (Y axis direction), the guide slit 135 may be formed by the gap between the first leg 137 and the second leg 138.

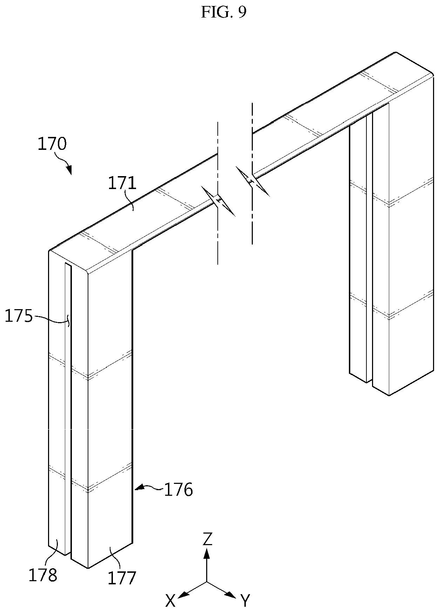

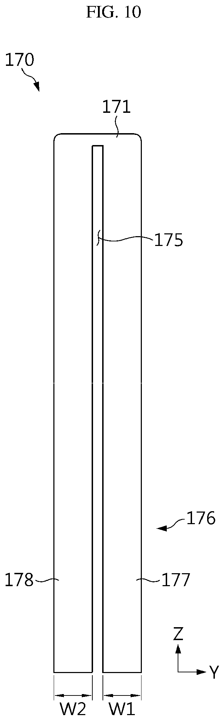

FIG. 9 is a diagram illustrating an interrupt member 170 according to another embodiment of the present disclosure, and FIG. 10 is a side view of the interrupt member 170 of FIG. 9.

The interrupt member 170 according to this embodiment is similar to the interrupt member 130 of the previous embodiment, and regarding the components that are substantially identical or similar to the previous embodiment, redundant description is omitted, and hereinafter, difference(s) between this embodiment and the previous embodiment will be described.

Referring to FIGS. 9 and 10, the interrupt member 170 may include an interrupt cover 171 and an interrupt leg 176.

The interrupt cover 171 is similar to the interrupt cover 131 of the previous embodiment, and hereinafter, redundant description is omitted.

The interrupt leg 176 may include a first leg 177 and a second leg 178.

A thickness W1 of the first leg 177 may correspond to the step space formed at the front side (+Y axis direction) of the case terrace 115 (see FIG. 6) of the battery case 112 (see FIG. 6) of the battery cell 110 (see FIG. 6). For example, the thickness W1 of the first leg 177 may be at least equal to the thickness of the step space formed at the front side (+Y axis direction) of the case terrace 115 (see FIG. 6).

A thickness W2 of the second leg 178 may correspond to the step space formed at the rear side (-Y axis direction) of the case terrace 115 (see FIG. 6) of the battery case 112 (see FIG. 6) of the battery cell 110 (see FIG. 6). For example, the thickness W2 of the second leg 178 may be at least equal to the thickness of the step space formed at the rear side (-Y axis direction) of the case terrace 115 (see FIG. 6).

Additionally, the guide slit 175 formed between the first leg 177 and the second leg 178 may have a thickness corresponding to the thickness of the case terrace 115 of the battery case 112 of the battery cell 110 (see FIG. 6).

As described above, the interrupt member 170 according to an embodiment of the present disclosure may offset the step space in the front-rear direction (Y axis direction) of the case terrace 115 (see FIG. 6) of the battery case 112 (see FIG. 6) of the battery cell 110 (see FIG. 6) through the first leg 177 and the second leg 178 having the predetermined thickness W1, W2, thereby preventing the vent materials such as flames or gases from entering or staying in the step space more effectively.

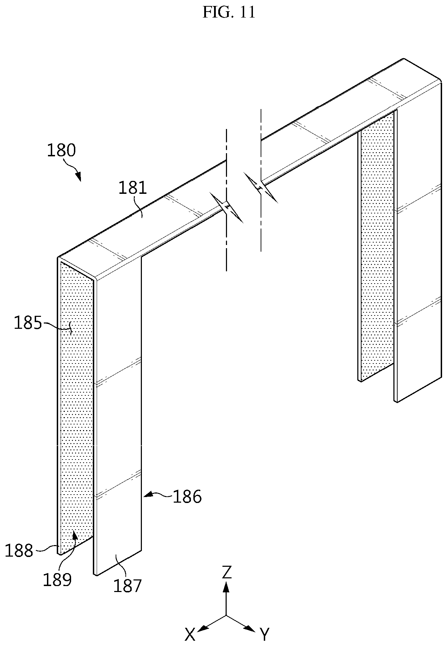

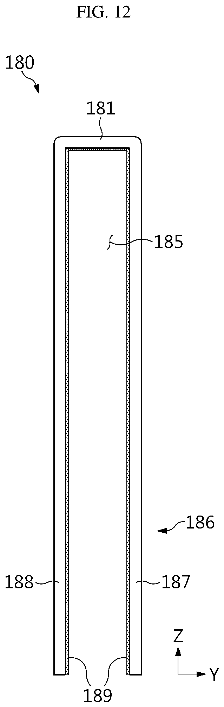

FIG. 11 is a diagram illustrating an interrupt member 180 according to still another embodiment of the present disclosure, and FIG. 12 is a side view of the interrupt member 180 of FIG. 11.

The interrupt member 180 according to this embodiment is similar to the interrupt member 130 of the previous embodiment, and regarding the components that are substantially identical or similar to the previous embodiment, redundant description is omitted, and hereinafter, difference(s) between this embodiment and the previous embodiment will be described.

Referring to FIGS. 11 and 12, the interrupt member 180 may include an interrupt cover 181, an interrupt leg 186 and a coating layer 189.

The interrupt cover 181 is similar to the interrupt cover 131 of the previous embodiment, and hereinafter, redundant description is omitted.

The interrupt leg 186 may include a first leg 187 and a second leg 188. The first leg 187 and the second leg 188 are similar to each other, and hereinafter, redundant description is omitted.

The coating layer 189 may be disposed on one surface of the interrupt member 180 facing the battery cell 110 when the interrupt member 180 is mounted in the battery cell 110 (see FIG. 6). Specifically, the coating layer 189 may be disposed on the inner surface of the interrupt cover 181, the inner surface of the first leg 187 and the inner surface of the second leg 188. The coating layer 189 may include a material having fire resistance and flame retardancy functions.

Accordingly, in this embodiment, it may be possible to further increase the prevention or propagation delay effect of heat, flames or gases when the thermal event occurs due to the abnormal situation in the battery cell 110 through the coating layer 189 of the interrupt member 180 on the surface facing the battery cell 110 (see FIG. 6).

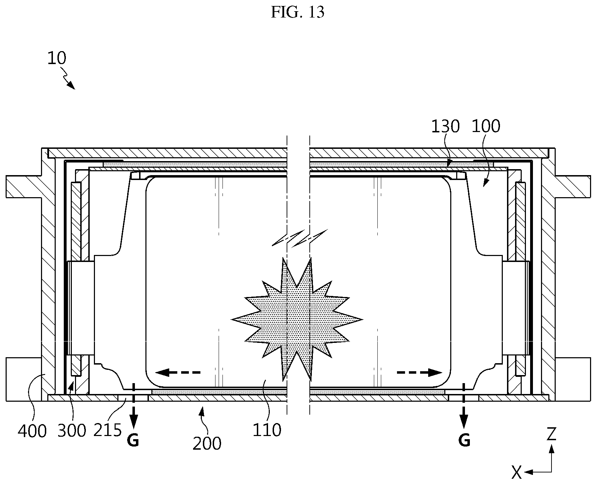

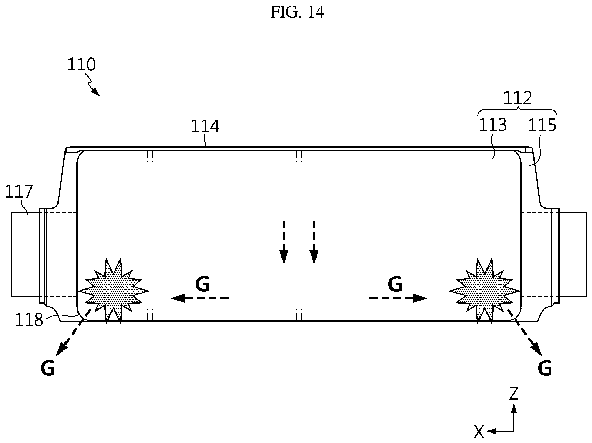

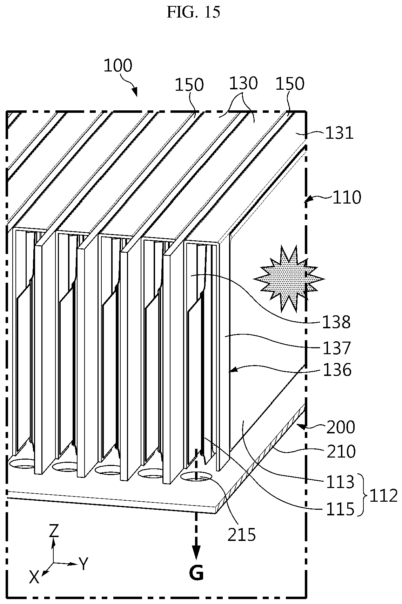

FIG. 13 is a diagram illustrating the directional venting path of the vent materials such as flames or gases when the thermal event occurs due to the abnormal situation in the at least one battery cell 110 of the battery module 10 of FIG. 1, FIG. 14 is a diagram illustrating the directional venting path of the vent materials such as flames or gases emitted from the battery cell 110 when the thermal event occurs as shown in FIG. 12, and FIG. 15 is a diagram illustrating thermal propagation prevention and directional venting guide through the interrupt member 130 when the thermal event occurs in the battery cell 110 in which the abnormal situation occurred as shown in FIG. 13.

Referring to FIGS. 13 to 15, the vent materials G such as flames or gases may be produced when the thermal event occurs due to the abnormal situation in the at least one battery cell 110 of the battery module 10.

Since the interrupt member 130 covers the top portion and the two edge portions of the battery cell 110 in which the abnormal situation occurred with the bottom open, it may be possible to guide the downward (-Z axis direction) movement of the vent materials G such as flames or gases emitted from the battery cell 110 in the abnormal situation. Subsequently, the vent materials G such as flames or gases may escape in the downward direction of the battery module 10 quickly through the vent 215 on the bottom of the module case 200.

Describing the venting path of the vent materials G such as flames or gases, as shown in FIG. 14, the vent materials G such as flames or gases produced in the battery cell 110 in which the abnormal situation occurred may escape out of the battery cell 110 through the cell vent 118 at two sides on the bottom of the case body 113 of the battery case 112.

In an embodiment of the present disclosure, since the cell vent 118 is disposed at the two sides on the bottom of the battery cell 110 and the vent 215 is disposed at the two sides on the bottom of the module case 200 close to the cell vent 118, it may be possible to minimize the downward venting path of the vent materials G such as flames or gases. Accordingly, in an embodiment of the present disclosure, it may be possible to further increase the directional venting rate in the downward direction (-Z axis direction) of the battery module 10 when the thermal event occurs.

Additionally, since the interrupt member 130 according to an embodiment of the present disclosure covers the top portion (+Z axis direction) of the battery cell 110 and the front side portion (+Y axis direction) and the rear side portion (-Y axis direction) of the two edge portions of the battery cell 110, it may be possible to effectively prevent thermal propagation to the adjacent battery cells 110 in the stack direction (Y axis direction) of the battery cells 110.

Furthermore, in an embodiment of the present disclosure, since the interrupt member 130 is disposed in contact with the thermal barrier member 130 disposed between the battery cells 110 in the stack direction (Y axis direction), it may be possible to further increase the reliability in the prevention of thermal propagation to the adjacent battery cells 110.

Furthermore, since the top portion (+Z axis direction) and the front side portion (+Y axis direction) and the rear side portion (-Y axis direction) of the two edge portions of each of the adjacent battery cells 110 are also covered by the interrupt member 130, it may be possible to prevent the spread of the vent materials G such as heat, flames or gases produced from the battery cell 110 in which the thermal event occurred more effectively.

Referring back to FIGS. 1 to 3, the module case 200 may include a case body 210 and a case cover 230.

The case base 210 may have an approximately U shape, and support the bottom and two sides of the cell assembly 100. The case base 210 may have the vent 215 at two sides on bottom. The case cover 230 may be coupled to the case base 210 and cover the top of the cell assembly 110.

The busbar assembly 300 may include a busbar frame 310, a busbar member 320, a terminal member 330 and a busbar cover 340.

A pair of busbar frames 310 may be provided. The pair of busbar frames 310 may be disposed on two sides of the cell assembly 100 in the lengthwise direction (X axis direction).

The busbar frame 310 may have a lead slot 312 to allow the electrode leads 117 of the battery cells 110 to pass through. The lead slot 312 may allow the electrode leads 117 of the battery cells 110 to pass through to guide the connection to the busbar member 320 as described below.

Additionally, the busbar frame 310 may have a barrier member accommodation portion 315 for accommodating the ends of the thermal barrier members 150. The barrier member accommodation portion 315 may be formed in one surface of the busbar frame 310 facing the cell assembly 100. The barrier member accommodation portion 315 may be an accommodation groove into which the end of the thermal barrier member 150 may be inserted.

The busbar member 320 may be connected to the electrode leads 117 of the battery cells 110, and a plurality of busbar members 320 may be provided. The plurality of busbar members 320 may be mounted in the busbar frame 310.

The terminal member 330 may be configured to connect the battery cells 110 to an external power source and disposed in the busbar frame 310. For the connection to the external power source, at least a portion of the terminal member 330 may be exposed to the outside of the battery module 10.

A pair of busbar covers 340 may be provided. Each of the pair of busbar covers 340 may cover the busbar frame 310. The busbar cover 340 may prevent leakage of the vent materials such as flames or gases out of the busbar frame 310.

Additionally, the battery module 10 may include an end plate 400.

A pair of end plates 400 may be provided. The pair of end plates 400 may cover the busbar assembly 300 and disposed at the two end portions of the battery module 10 in the lengthwise direction (X axis direction). The pair of end plates 400 may be coupled to the module case 200 and form the appearance of the battery module 10.

Additionally, the battery module 10 may include a heat transfer member 500.

A pair of heat transfer members 500 may be provided. The pair of heat transfer members 500 may be disposed in contact with the upper and lower sides of the cell assembly 100, and contact the inner surface of the module case 200. The heat transfer member 500 disposed on the cell assembly 100 may contact the inner surface of the case cover 230, and the heat transfer member 500 disposed below the cell assembly 100 may contact the inner surface of the case base 210. The pair of heat transfer members 500 may transfer heat generated from the cell assembly 100 to the module case 200, thereby increasing the cooling performance of the battery module 10.

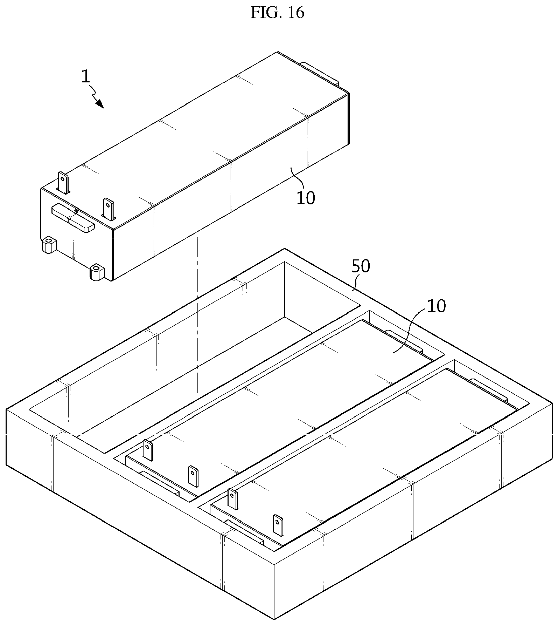

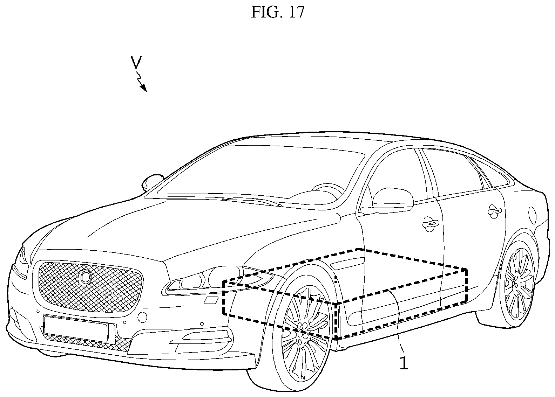

FIG. 16 is a diagram illustrating a battery pack 1 according to an embodiment of the present disclosure, and FIG. 17 is a diagram illustrating a vehicle V according to an embodiment of the present disclosure.

Referring to FIGS. 16 and 17, the battery pack 1 according to an embodiment of the present disclosure may include one or more battery modules 10 according to the previous embodiment and a pack case 50 accommodating the battery module 10.

The battery pack 1 may further include an electrical component such as a battery management system (BMS) to control the battery module 10 or a cooling unit such as a heat sink to cool down the battery module 10.

The battery pack 1 according to an embodiment of the present disclosure may further include any other components of the battery pack 1 known at the time the application was filed. For example, the battery pack 1 according to an embodiment of the present disclosure may further include a current sensor, a fuse, a service plug or any other components.

Additionally, the vehicle V according to an embodiment of the present disclosure may include at least one battery pack 1 according to the present disclosure. Additionally, in addition to the battery pack 1, the vehicle V according to an embodiment of the present disclosure may further include any other components included in vehicles. For example, in addition to the battery pack 1 according to an embodiment of the present disclosure, the vehicle V according to an embodiment of the present disclosure may further include a vehicle body, a motor, a control device such as an electronic control unit (ECU) or the like.

Additionally, the battery pack 1 according to an embodiment of the present disclosure may be provided in the vehicle V as well as any other devices, apparatus and equipment using secondary batteries such as Energy Storage Systems.

Since the battery pack 1 and the vehicle V according to an embodiment of the present disclosure include the battery module 10 of the previous embodiment, it may be possible to ensure safety against thermal events in the battery pack 1 and the vehicle V.

According to the above-described embodiments, there may be provided the battery module 10 with improved safety against thermal events and the battery pack 1 and the vehicle V including the same.

While the exemplary embodiments of the present disclosure have been hereinabove illustrated and described, the present disclosure is not limited to the above-described particular embodiments, and it is apparent that a variety of modifications and changes may be made by those skilled in the art without departing from the claimed subject matter of the present disclosure set forth in the appended claims, and such modifications and changes should not be individually understood from the technical aspect or scope of the present disclosure.

## Claims

1. A battery module, comprising:
a cell assembly including a plurality of battery cells stacked;
a module case accommodating the cell assembly; and
a busbar assembly coupled to the module case, and electrically connected to the plurality of battery cells,
wherein the cell assembly includes an interrupt member configured to cover a portion of the plurality of battery cells to prevent thermal propagation to adjacent battery cells in a stack direction of the plurality of battery cells upon an occurrence of a thermal event in at least one battery cell.

2. The battery module according to claim 1, wherein the interrupt member guides venting of vent materials emitted from the at least one battery cell in a specific direction upon the occurrence of the thermal event in the at least one battery cell.

3. The battery module according to claim 2, wherein the module case has at least one vent on bottom to vent the vent materials, and
wherein the interrupt member has an open bottom to guide the venting of the vent materials toward the vent of the module case.

4. The battery module according to claim 1, wherein the cell assembly includes a thermal barrier member disposed between the plurality of battery cells in the stack direction of the plurality of battery cells.

5. The battery module according to claim 4, wherein the thermal barrier member contacts the interrupt member in the stack direction of the plurality of battery cells.

6. The battery module according to claim 1, wherein two end portions of the interrupt member are disposed close to the busbar assembly.

7. The battery module according to claim 6, wherein the busbar assembly covers two sides of the plurality of battery cells, and
wherein the two end portions of the interrupt member are disposed close to the busbar assembly.

8. The battery module according to claim 1, wherein the interrupt member is made of a flexible material.

9. The battery module according to claim 1, wherein the interrupt member covers a top portion and two edge portions of the plurality of battery cells.

10. The battery module according to claim 9, wherein the interrupt member covers a front side portion and a rear side portion of the two edge portions of the plurality of battery cells in the stack direction of the plurality of battery cells.

11. The battery module according to claim 1, wherein each of the plurality of battery cells includes:
an electrode assembly;
a battery case including a case body accommodating the electrode assembly and a case terrace extending in a stepped manner from two sides of the case body; and
a pair of electrode leads connected to the electrode assembly, protruding from the case terrace of the battery case and connected to the busbar assembly, and
wherein the interrupt member covers a top portion of the case body, and a front side portion and a rear side portion of the case terrace.

12. The battery module according to claim 11, wherein the top portion of the case body has a sealing portion connected to the case terrace and configured to seal the case body, and
wherein the interrupt member covers the sealing portion.

13. The battery module according to claim 11, wherein the interrupt member has a guide slit to allow the pair of electrode leads to pass through to prevent interference with the pair of electrode leads.

14. A battery pack, comprising:
at least one battery module according to any one of claims 1 to 13; and
a pack case accommodating the at least one battery module.

15. A vehicle comprising at least one battery pack according to claim 14.
